# EUROPÄISCHE PATENTSCHRIFT

(11) **EP 3 308 942 B1**
(45) Veröffentlichungstag und Bekanntmachung des Hinweises auf die Patenterteilung: **01.03.2023**
(21) Anmeldenummer: 17201245.2
(22) Anmeldetag: 23.03.2011
(51) Int. Cl.: B29C 49/78, B29C 49/42, B29C 49/12, B29C 49/06, B29C 49/32

(54) **STRECKBLASMASCHINE**
STRETCH BLOWING MACHINE
MACHINE DE SOUFFLAGE-ÉTIRAGE

(30) Priorität: 27.04.2010 DE 102010028255
(43) Veröffentlichungstag der Anmeldung: 18.04.2018
(62) Teilanmeldung aus: 11159415.6
(73) Patentinhaber: KRONES Aktiengesellschaft, 93073 Neutraubling (DE)
(72) Erfinder: Finger, Dieter, 93073 Neutraubling (DE); Geltinger, Florian, 93073 Neutraubling (DE); Schneider, Helmut, 93073 Neutraubling (DE)
(74) Vertreter: Grünecker Patent- und Rechtsanwälte PartG mbB

(56) Entgegenhaltungen:
- WO-A1-99/48669
- DE-A1-102008 005 311
- DE-A1-102008 012 757
- US-A- 5 169 705

## Beschreibung

Die Erfindung betrifft eine Streckblasmaschine gemäß Oberbegriff des Patentanspruchs 1.

Bei der aus DE 10 2008 012 757 A bekannten Streckblasmaschine (Rundläufer) ist jeder Blasstation eine elektronische Steuereinheit im drehenden Teil zugeordnet, die sowohl die Reckstangenbewegung als auch die Blasdruck- und Ventilsteuerung steuert, um die Steuerung für den Produktionsablauf bei einem Produktwechsel schnell anpassen zu können. Die Steuereinheiten im drehenden Teil sind über ein Bussystem miteinander verknüpft und an eine übergeordnete Steuervorrichtung außerhalb des drehenden Teils angeschlossen. Jede Blasstation kann einen Zeitgeber aufweisen, um winkelunabhängig zu steuern. Die Positionen, die die Reckstange im Produktionsablauf durchläuft, können für verschiedene Behältersorten in Rezepten gespeichert sein. Die Reckgeschwindigkeit ist unabhängig von der Produktionsgeschwindigkeit frei parametrierbar. Jede Steuereinheit kann einen Servofrequenzumrichter aufweisen, und steuert nicht nur das elektrische Recken, sondern im Idealfall alle Funktionen der Blasstation. Ein Arbeitstakt wird durch ein Startsignal initiiert und läuft dann zeitgesteuert ab. In jeder Steuereinheit wird sozusagen ein Computerprogramm abgearbeitet. In der Steuereinheit kann ein zeitabhängiger Reckverlauf hinterlegt sein. Der elektrische Servomotor für die Reckstangensteuerung ist ein drehender Frequenzumrichtermotor, wobei die Frequenzumrichtung auch die Ansteuerung der Ventile übernehmen kann. Der elektrische Servomotor treibt einen die Reckstange tragenden Reckschlitten über ein Band. Die Betriebsmedienversorgung des drehenden Teils erfolgt über wenigstens eine Drehdurchführung zwischen dem drehenden und dem feststehenden Teil.

Ferner sind Streckblasmaschinen in der Praxis bekannt, in denen in jeder Blasstation die Reckstangenbewegung durch eine Kurvensteuerung kombiniert mit wenigstens einem Pneumatikzylinder gesteuert wird. Aus der Praxis ist auch bekannt, beim elektrischen Recken den elektrischen Servomotor mit einem Pneumatikzylinder zu kombinieren.

Aus EP 1 066 149 B ist eine Streckblasmaschine bekannt, deren Blasstationen stationär angeordnet sind. Das Reckstangen-Antriebssystem arbeitet mit einem elektrischen Servomotor, der den die Reckstange tragenden Reckschlitten über einen Zahnriemen antreibt und die Reckstangenbewegung weggesteuert oder kraftgesteuert über die Zeit veranlasst. Jeder Blasstation, die gegebenenfalls mehrere Blasformen umfasst, ist eine elektronische Steuereinheit zugeordnet, die in geschlossenen Regelkreisen die Reckstangenbewegung und die Blasdruckbeaufschlagung steuert. Es können verfahrensgemäß aus unterschiedlichen gespeicherten Kurven des Reckstangenweges über die Zeit, der Reckstangenkraft über die Zeit oder des Blasdüsendrucks über die Zeit passende ausgewählt und abgearbeitet werden. Bei der weggesteuerten Reckstangenbewegung wird maximal eine Geschwindigkeitsänderung vorgenommen. Vor Produktionsbeginn werden erste und zweite Kalibrierungen der später im Produktionsablauf vorzunehmenden Reckstangensteuerung langsam durchgeführt, deren Resultate gespeichert werden. Bei der ersten Kalibrierung wird der Hubweg der Reckstange bis zu einem der Dicke des Flaschenbodens entsprechenden Abstand vom Formhohlraumboden ermittelt, d.h., gegebenenfalls inklusive eines Nachdrückweges für den Preformboden. Bei der zweiten Kalibrierung wird der Hubweg der Reckstange bis zum Preformboden des kalten Preforms abzüglich eines Hubinkrements für z.B. temperaturbedingten Verformungen heißer Preforms ermittelt. Die Regelkreise generieren aufgrund der Kalibrierungen beispielsweise zeitbezogene Hubkurven für den eigentlichen Produktionsablauf. Ähnlich können auch zeitbezogene Druckkurven für eine Vorblas- und eine Endblasphase generiert werden.

Aus DE 10 2008 013 419 A ist ein pneumatischer Reckstangenantrieb mit einem elektrischen Linearmotor oder Servomotor bekannt. Eine zugeordnete Steuervorrichtung ist jeweils auf die gewählte Antriebsart abgestimmt.

Der Erfindung liegt die Aufgabe zugrunde, eine Streckblasmaschine der eingangs genannten Art anzugeben, die eine kostengünstige und universell einsetzbare Ausstattung aufweist, wobei beim elektrischen Recken unkontrollierte Anzugskräfte vermieden werden.

Die gestellte Aufgabe wird mit den Merkmalen des Patentanspruchs 1 gelöst.

Die elektronische Steuereinheit der Blasstation ist kostengünstig universell in verschiedenen Blasmaschinen nutzbar, die sich beispielsweise durch unterschiedliche Reckstangen-Antriebssysteme unterscheiden. Diese kostengünstige und universell nutzbare Steuereinheit kann die Mehrkosten einer Ausstattung zum elektrischen Recken zumindest teilweise kompensieren (Gleichteilphilosophie bezüglich der Steuereinheit). Der als Linearmotor ausgebildete Servomotor ist bezüglich seines Läufers tubular ausgebildet, wobei er einen zur Reckstange koaxialen oder zumindest im Wesentlichen koaxialen Direktantrieb für die Reckstange bildet. Obwohl auch ein flacher Linearmotor nutzbar wäre (ist kein Teil der vorliegenden Erfindung), bietet ein Linearmotor in tubularer Ausbildung den Vorteil, unkontrollierte Anzugskräfte zu vermeiden. Eine koaxiale Anordnung des Direktantriebes vermeidet Momente auf die Linearführung beispielsweise des Reckschlittens.

Bei einer zweckmäßigen Ausführungsform ist der Läufer des Linearmotors gegenüber der Reckstange um maximal etwa 100 mm zur Seite versetzt. Diese geringfügige Versetzung bedingt einerseits nur moderate Momente in der Linearführung des Reckschlittens und zwischen dem Läufer und der Reckstange, ist jedoch im Hinblick auf einen raschen und problemlosen Reckstangenwechsel von Vorteil.

Im Übrigen bietet die Verwendung eines Linearmotors, insbesondere in tubularer Bauweise, in Kombination mit der elektronischen Steuereinheit die Möglichkeit, den Weg, die Kraft und den Druck oder nur die Kraft und den Weg der Reckstange zu steuern. Dabei wird zweckmäßig eine Wegsteuerung bis kurz vor dem Ende des Reckprozesses vorgenommen, und dann am Ende des Reckprozesses eine reine Kraftsteuerung, z.B. um das Überdrücken des Behälterbodens exakt zu definieren.

Ein generatorischer Betrieb des elektrischen Servomotors, insbesondere in Form eines Linearmotors, speziell in tubularer Ausbildung, lässt elektrische Energie rückgewinnen, beispielsweise bereits aus der Massenträgheit oder Gewichtskraft des Reckstangen-Antriebssystems und/oder aus der aus dem Druck in der Blasform resultierenden Anhebekraft an der Reckstange. Selbst wenn das Ausmaß der rückgewonnenen elektrischen Energie im Vergleich zum Primärenergieeinsatz klein sein sollte, ergibt sich bei häufig vielen Blasstationen und hoher Produktionsfrequenz dennoch eine nennenswerte insgesamte Energieeinsparung.

Zweckmäßig ist die Steuereinheit zusätzlich mit Hard- und Software-Technik ausgestattet, die in der Blasstation auch zum Steuern der Blasdüse und/oder der Ventilsektion, zweckmäßig in Zuordnung zur Reckstangenbewegung oder in Zuordnung der Reckstangenbewegung zur Blasdüsen- oder Ventilsektionssteuerung, nutzbar ist. Dies verringert den Steuerungsaufwand nennenswert.

Bei einer zweckmäßigen Ausführungsform der Streckblasmaschine ist die Steuereinheit vom elektrischen Servomotor separiert installiert, um gegenseitige Wärmeeinkopplungen zu vermeiden.

Zweckmäßig ist zumindest ein Frequenzumrichter des elektrischen Servomotors (des Linearmotors) vom Servomotor separiert, vorzugsweise mit einem Wärmeeinkopplungen vom Servomotor zum Frequenzumrichter oder umgekehrt ausschließenden Abstand. Der Frequenzumrichter kann sogar an einer mehrere bis alle Frequenzumrichter für die Blasstationen der Reckblasmaschine enthaltenden Zentral-Installationsstelle installiert sein. Beispielsweise werden die Frequenzumrichter in einem, vorzugsweise gekühlten, Schaltschrank zentral untergebracht. Der Schaltschrank kann fremdgekühlt werden, beispielsweise über ein Flüssigkeitskühlsystem, oder mit wenigstens einer sogenannten Cold-Plate, die z.B. von den Frequenzumrichtern generierte Wärme abführt. Dies resultiert in langen störungsfreien Standzeiten der elektrischen bzw. elektronischen Ausstattungen.

In Streckblasmaschinen werden üblicherweise elektrische Servomotoren für das elektrische Recken über Frequenzumrichter mit Zwischenkreisen mit der Versorgungsspannung versorgt. Die Zwischenkreisspannung wird konventionell durch Brückengleichrichter erzeugt, die eine Zwischenkreisspannung etwa entsprechend dem 1,4-Fachen der Eingangsspannung aufbringen. Beispielsweise wird bei üblicher Netzspannung von 400 Volt eine Zwischenkreisspannung von etwa 560 Volt erreicht. Ein Nachteil dieses bekannten Systems ist es, dass bei unterschiedlichen Netzspannungen in unterschiedlichen Ländern, z.B. in den USA, unterschiedliche Zwischenkreisspannungen für die elektrischen Servomotoren entstehen, was unter Umständen sogar länderspezifische Motorenauslegungen zur Folge haben kann. Mit diesem Nachteil sind erhebliche Verlustleistungen und unzweckmäßig große Kabelquerschnitte verbunden und können Drehmomenteinbrüche oder Schub- bzw. Zugkraftverluste auftreten. Dieser Nachteil lässt sich erfindungsgemäß dadurch vermeiden, dass der jeweilige Frequenzumrichter, vorzugsweise in einem Zwischenkreis, wenigstens ein geregeltes Hochstell-Schaltnetzteil aufweist, mit dem die Zwischenkreisspannung zur Versorgung des jeweiligen elektrischen Servomotors auf zwischen etwa 600 bis 900 Volt, vorzugsweise zwischen etwa 750 und 800 Volt, angehoben und gehalten wird. Durch die Regelung und das Hochstellen lässt sich die Zwischenkreisspannung unabhängig von der Netzspannung oder Nennspannung halten. Es können länderunabhängig stets dieselben Servomotortypen verwendet werden, die an diese angehobene Zwischenkreisspannung angepasst sind. Dadurch lässt sich der Nennstrom senken, was in niedrigeren Verlustleistungen und günstig kleinen Kabelquerschnitten resultiert. Darüber hinaus lassen sich solche angepassten elektrischen Servomotoren z.B. mit höheren Drehzahlen betreiben und werden Kraft- oder Drehmomenteinbrüche zuverlässig ausgeschlossen. Das Hochstellen der Zwischenkreisspannung ist besonders zweckmäßig im Falle von Linearmotoren als Servomotoren, beispielsweise zur Reckstangenbewegungssteuerung.

Bei einer zweckmäßigen Ausführungsform der Streckblasmaschine sind Zwischenkreise von Frequenzumrichtern im drehenden Teil mit Zwischenkreisen von Frequenzumrichtern im stehenden Teil elektrisch gekoppelt, und kann, vorzugsweise im stehenden Teil wenigstens ein Energiespeicher zum Versorgen zumindest der Servomotoren im drehenden Teil bei Netzausfall vorgesehen sein. Der im stehenden Teil vorgesehene Energiespeicher lässt im drehenden Teil einen Energiespeicher einsparen, um z.B. bei einem Netzausfall ein kontrolliertes Rückstellen aller Komponenten vornehmen zu können, und nach Beheben des Netzausfalles wieder unmittelbar weiter produzieren zu können.

Bei einer alternativen Ausführungsform wird im drehenden Teil wenigstens ein Energiespeicher, vorzugsweise eine Schwungscheibe, eine Kondensatorbank oder eine Batterie, oder dgl., platziert, um bei Netzausfall dennoch eine Rückstellung in die erforderlichen Ausgangspositionen durchführen zu können (kontrolliertes Herunterfahren des Systems), so dass bei erneutem Produktionsbeginn keine Schäden auftreten. Der Nachteil der autark betriebenen und gesteuerten elektrischen Servomotoren beispielsweise zur Reckstangenbewegungssteuerung wird somit auf steuerungstechnisch einfache Weise beseitigt.

Bei einer zweckmäßigen Ausführungsform sind Antriebsachsen des stehenden Teiles mit Antriebsachsen, vorzugsweise elektrischer Antriebe, im drehenden Teil elektrisch gekoppelt. Diese Kopplung spart z.B. einen Geber im drehenden Teil ein.

Bei einer zweckmäßigen Ausführungsform des Linearmotors in tubularer Bauweise wird der Läufer gegenüber dem Stator durch Führungsringe im Stator bzw. an beiden Enden des Stators oder durch wenigstens eine in den Stator durchgehend oder partiell durchgehend integrierte Führungshülse oder sogar durch wenigstens eine außerhalb des Stators angeordnete Führung geführt. Die externe Führung kann beispielsweise zwei beabstandete Führungsglieder an einer Linearführung aufweisen. Diese gezielte Führung des Läufers trägt dazu bei, hohe Kräfte in präzisem Ausmaß zu erzeugen, und Verschleiß zwischen dem Läufer und dem Stator zu vermindern, bzw. parasitäre Reibungsverluste zu minimieren.

Bei einer zweckmäßigen Ausführungsform kann zumindest zum teilweisen Kompensieren von aus dem Blasdruck in der Blasform auf die Reckstange einwirkender Rückstellkräften ein Kraftspeicher, wie eine Feder oder ein Pneumatikzylinder, vorgesehen werden, der dem Linearmotor assistiert bzw. von diesem Kraftspitzen fernhält. Der Kraftspeicher kann, vorzugsweise, sogar aktiv gesteuert werden, abhängig von der jeweiligen Prozessphase und/oder Reckstangenposition. Der Energiespeicher ermöglicht eine kleinere Dimensionierung des Servomotors und egalisiert Rückhubkräfte an der Reckstange durch den Druck im Behälter in der Blasform.

Der Linearmotor in tubularer Bauweise und die Steuereinheit der Blasstation werden zweckmäßig auf einem, vorzugsweise auch die Ventilsektion tragenden, Lagerbock montiert. Zumindest der Linearmotor kann dort über einen Kühlkörper montiert sein, der im Betrieb generierte Wärme abführt. Der Linearmotor kann Kühlrippen oder Luftleitbleche zur Kühlung z.B. durch gezielte Luftströmungen aufweisen. Der Lagerbock weist eine Linearführung für den Reckschlitten auf, an welchem die einen relativ zur Reckstange linear verstellbaren Blasschlitten durchsetzende Reckstange mit dem Läufer, vorzugsweise trennbar, gekuppelt ist. Der Lagerbock mit den daran montierten Komponenten ist vorfertigbar und vor der Endmontage auf Funktion überprüfbar.

Bei einer zweckmäßigen Ausführungsform ist am Lagerbock ein, vorzugsweise einstellbarer und/oder abgefederter, Anschlag für den Reckschlitten angeordnet, der beispielsweise die Endlage des Reckschlittens nach dem Rückhub definiert und/oder zum Referenzieren oder Kalibrieren nutzbar ist.

Ausführungsformen des Erfindungsgegenstandes werden anhand der Zeichnungen erläutert. Es zeigen:
- Fig. 1: eine Schemadraufsicht einer Streckblasmaschine (Rundläufer),
- Fig. 2: eine Blasstation mit Hauptkomponenten,
- Fig. 3: eine Frontansicht der Blasstation von Fig. 2,
- Fig. 4: drei Detailvarianten in schematischer Darstellung eines tubularen Linearmotors, und
- Fig. 5: eine Schemadarstellung von elektrischen Komponenten in der Streckblasmaschine.

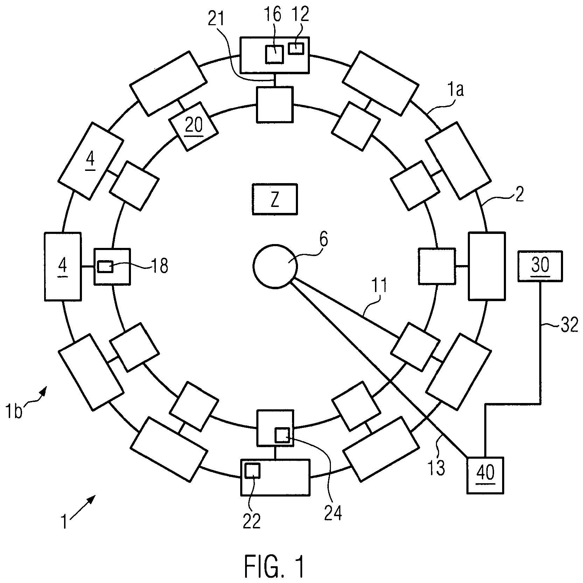

Fig. 1 zeigt schematisch eine Streckblasmaschine 1 zum Streckblasen von Behältern aus Preforms. Die Streckblasmaschine 1 ist ein Rundläufer-Typ mit einem umfangsseitig Blasstationen 4 tragenden Blasrad 2, das einen sich in Relation zu einem stehenden Teil 1b drehenden Teil 1a repräsentiert. Das erfindungsgemäße Konzept ist jedoch ohne Einschränkung auch für Streckblasmaschinen verwendbar, bei denen die Blasstationen stationär angeordnet sind (nicht gezeigt).

Für zumindest eine Blasstation 4 ist in Fig. 1 jeweils eine elektronische Steuereinheit 20 auf dem Blasrad 2 angeordnet. Die Energieversorgung der Steuereinheiten 20 erfolgt z.B. über Verbindungsleitungen 11 und eine Drehdurchführung 6, z.B. eine Schleifringanordnung und/oder Mediendurchführung, im Zentrum des Blasrades 2. Jede Blasstation 4 weist ein Reckstangen-Antriebssystem A, hier mit einem elektrischen Servomotor 16, sowie eine Ventilsektion 12 gegebenenfalls mit mehreren Ventilen zum Steuern der Blasluftzufuhr beim Blasprozess auf. Ferner kann bei jeder Blasstation 4 wenigstens ein Sensor 22 vorgesehen sein, der als Geber in Kommunikationsverbindung mit der jeweiligen Steuereinheit 20 stehen kann. Als weitere elektronische Ausstattung ist gegebenenfalls jeweils ein Zeitgeber 24 vorgesehen, der beispielsweise in Abhängigkeit von einem Startsignal einen Arbeitstakt initiieren kann. Weiterhin kann wenigstens ein Sensor 30 als Positionsgeber zum Erfassen einer Winkelposition des Blasrades 2 vorgesehen sein. Eine zentrale Steuereinrichtung 40 kann im stehenden Teil 1b angeordnet sein, die über eine Kommunikationsverbindung 32 beispielsweise mit dem Sensor 30 verbunden ist. Ferner kann eine Kommunikationsverbindung 13, z.B. zur Übertragung eines Startsignals an die jeweilige Steuereinheit 20 vorgesehen werden. In zumindest einer Steuereinheit 20 kann eine Speicher- und/oder Eingabe- und/oder Anzeigesektion 18 vorgesehen sein, um Daten abzulegen, auszulesen und dgl. Jede Steuereinheit 20 kommuniziert über eine Verbindung 21 mit der Blasstation 4 bzw. zumindest dem Reckstangen-Antriebssystem A oder dem Servomotor 16, der zum elektrischen Recken eingesetzt wird.

Der elektrische Servomotor 16 könnte (nicht gezeigt) mit einem Kraftspeicher oder einem Pneumatikzylinder kombiniert sein, der beim Reckprozess assistiert oder eingreift und gegebenenfalls ebenfalls von der Steuereinheit 20 gesteuert wird.

Ferner kann die Steuereinheit 20 so ausgebildet sein, dass sie auch die Druckbeaufschlagung beim Blasprozess und/oder die erforderlichen Verstellungen einer Blasdüse und anderer Komponenten steuert.

Am Blasrad 2 ist ferner schematisch eine Zentralschmiervorrichtung Z angedeutet, die mechanische Komponenten am Blasrad, z.B. dosiert, mit Schmierstoff versorgt.

Die Bewegung eines Blasschlittens kann durch eine nicht dargestellte Kurvensteuerung gesteuert werden (ist nicht Teil der vorliegenden Erfindung).

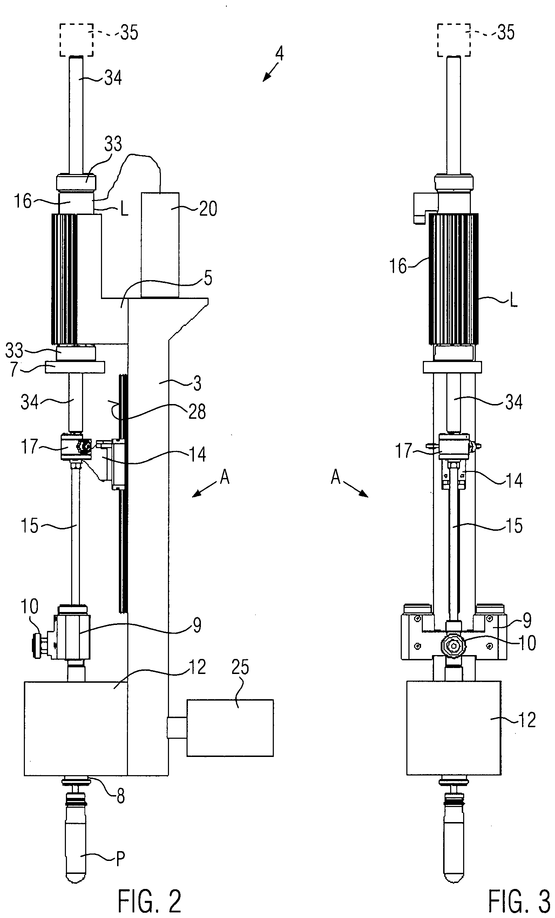

Die Fig. 2 und 3 zeigen eine Blasstation 4 mit dem Reckstangen-Antriebssystem A zum elektrischen Recken, wobei der Servomotor 16 hier ein Linearmotor L ist, und zwar ein Linearmotor L in tubularer Bauweise. Alternativ (ist nicht Teil der vorliegenden Erfindung) könnte auch ein Linearmotor in anderer Bauform, z.B. flacher Bauform, verwendet werden. Der Linearmotor L bildet mit seinem Läufer 34 einen Direktantrieb einer Reckstange 15. Der Linearmotor L ist separiert von der Steuereinheit 20 mit dieser auf dem Kopfende des Lagerbocks 3 installiert, vorzugsweise unter Zwischenschaltung des Kühlkörpers 5 zumindest für den Linearmotor L. In dieser Ausführungsform des Linearmotors L ist der Läufer 34 in Führungshülsen 33 an beiden Enden des Linearmotors linear geführt und koaxial zur Reckstange 15, wobei der Läufer 34 und die Reckstange 15 im Bereich eines Reckschlittens 14 über eine trennbare Kopplung 17, z. B. für einen Reckstangenwechsel, miteinander gekoppelt sind. Der Reckschlitten 14 ist an einer Linearführung 28 geführt, die an der der Reckstange 15 zugewandten Seite des Lagerbocks 3 montiert ist. Die Reckstange 15 durchsetzt einen Blasschlitten 9, der mit einem Hebeglied 10 ausgestattet sein kann, um den Blasschlitten 9 anzuheben, beispielsweise um den in der nicht gezeigten Blasform fertiggestellten Behälter zu entlüften, falls ein Auslassventil zu einem Schalldämpfer 25 an einer Ventilsektion 12 nicht ordnungsgemäß funktionieren sollte, und auch eine Blasdüse 8 und die Ventilsektion 12. Die Ventilsektion 12 ist in dieser Ausführungsform am Lagerbock 3 montiert, wie auch ein Schalldämpfer 25, der einem nicht gezeigten Auslassventil der Ventilsektion 12 zugeordnet ist.

Am Lagerbock 3 kann ein Anschlag 7 für den mit der Reckstange 15 gekoppelten Reckschlitten 14 vorgesehen sein, wobei der Anschlag 7, vorzugsweise, einstellbar und/oder abgefedert ist. Die Reckstange 15 ist über die lösbare Kopplung 17 im Reckschlitten 14 festgelegt und erstreckt sich parallel zum Lagerbock 3 nach unten bis zu einer Blasform, an deren Position ein Preform P gezeigt ist, aus dem durch Überlagerung eines Reckprozesses und eines Blasprozesses ein Behälter mit der Form des Formhohlraums der Blasform beim Produktionsablauf der Streckblasmaschine 1 hergestellt wird. Die Reckstange 15 durchsetzt den Blasschlitten 9, mit dem ein Blaskolben bzw. die Blasdüse 8 verbunden ist, die relativ zu der Blasform anhebbar und bis zur Abdichtung auf der Mündung des Preforms P absenkbar ist. Die Blasform umfasst (nicht gezeigt) beispielsweise zwei Formhälften und einen Formboden, wobei zumindest die Formhälften in Trägern angeordnet sind, die über einen nicht gezeigten Mechanismus bewegt werden können, um die Blasform zu öffnen und zu schließen und in geschlossenem Zustand zu verriegeln. Nach Abschluss der Verriegelungsphase wird im Produktionsablauf die Blasdüse 8 auf die Preformmündung P aufgesetzt, ehe über die Ventilsektion 12 die Druckbeaufschlagung vorgenommen wird, beispielsweise um eine Vorblasphase mit geringerem Druckniveau und anschließend eine Fertigblasphase mit hohem Druckniveau auszuführen, überlagert mit dem Reckprozess durch die Reckstange 15, die in die Blasform eingeschoben wird.

Der Anschlag 7 ist beispielsweise zum Kalibrieren des Reckstangen-Antriebssystems A nutzbar.Gestrichelt ist in den Fig. 2 und 3 ein Kraftspeicher 35 angedeutet, z.B. eine Feder oder ein Pneumatikzylinder, der mit dem Läufer 34 in Antriebsverbindung steht und dem Linearmotor L assistiert oder/und bestimmte Kraftverläufe erzeugt oder Kräfte aufnimmt oder kompensiert, die beispielsweise vom Druck im hergestellten Behälter bei noch nicht entlüfteter, z. B. geteilter Blasform die Reckstange 15 in Rückhubrichtung beaufschlagen.

In dieser Ausführungsform kann die Reckstange 15 ihren Rückhub unter Nutzen dieses Drucks in der Blasform ausführen, beispielsweise bis sie durch den Blasschlitten 9 abgefangen wird, oder durch den Anschlag 7 am Lagerbock, oder durch eine Gegenkraft des Kraftspeichers 35 bzw. des Linearmotors L. Im Übrigen kann der Linearmotor L während des Rückhubs stromlos geschaltet sein oder im generatorischem Betrieb laufen und Energie rückgewinnen.

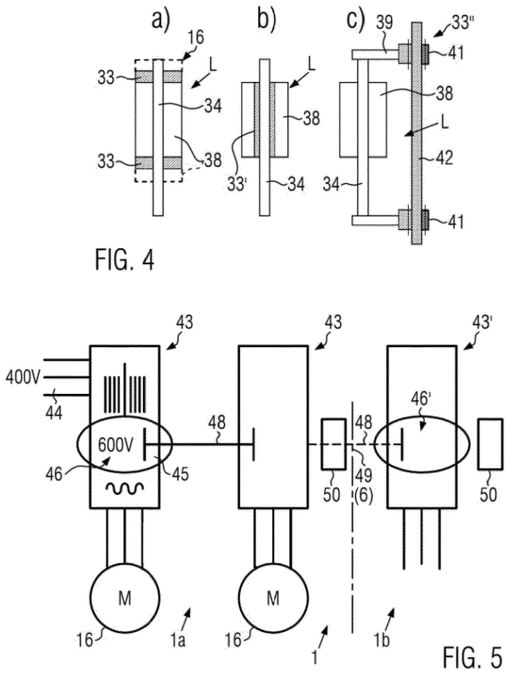

Die tubulare Ausbildung des Linearmotors L als der Servomotor 16 in den Fig. 2 und 3 ist schematisch anhand Fig. 4 gezeigt, die drei Varianten a), b) und c) zeigt.

In der Variante a) in Fig. 4 sind, ähnlich wie in Fig. 2, an beiden Enden eines Stators 38 Führungshülsen 33 angeordnet, die den Läufer 34 zentral im Stator 38 führen. Diese Führungshülsen 33 könnten (gestrichelt angedeutet) auch innen in den Stator 38 integriert sein.

In der Variante b) in Fig. 4 ist in den Stator 38 eine durchgehende Führungshülse 33' integriert, die sich hier über die gesamte Länge des Stators 38 erstreckt und einen geringeren Außendurchmesser hat als der Stator 38. Der Stator 38 ist im Übrigen mit weitgehend kreisringförmigem Querschnitt ausgebildet. Die Führungshülse 33' könnte sich nur über einen Teil der Länge des Stators 38 erstrecken oder in beispielsweise zwei kürzere Führungshülsen unterteilt sein.

In der Variante c) in Fig. 4 ist eine gegenüber dem Stator 38 außenliegende Führung 33" für den Läufer 34 vorgesehen. Der Läufer 34 ist beispielsweise über zwei Halter 39 und Führungshülsen 41 an einer Linearführung 42 geführt. In der Variante c) in Fig. 4 könnte der Läufer 34 auch nur an einem Ende geführt sein.

Wie erwähnt, bildet der Linearmotor L mit seinem Läufer 34 in den Fig. 2 und 3 einen zur Reckstange 15 koaxialen Direktantrieb. Es wäre allerdings möglich (nicht gezeigt), den Läufer 34 gegenüber der Reckstange 15 seitlich zu versetzen, beispielsweise um maximal 100 mm, um günstigere Voraussetzungen für einen Reckstangenwechsel zu bieten.

Die Steuerung der Reckstangenbewegung wird von der Steuereinheit 20 entweder weggesteuert oder kraftgesteuert durchgeführt, und gegebenenfalls abhängig von der Blasdrucksteuerung, wobei, wie erwähnt, während eines Arbeitstaktes im Produktionsablauf sogar zwischen Wegsteuerung und Kraftsteuerung umgeschaltet werden kann.

Die korrekten Positionen der Reckstange 15 während des Reckprozesses werden von der Steuereinheit 20 vorgegeben, wie auch die Geschwindigkeit, die zweckmäßig mindestens zweimal während des Reckprozesses geändert wird, und zwar entweder durch einen vorhergehenden Kalibriervorgang zum Beschaffen von Parameterwerten für die Steuereinheit 20 und/oder durch Eingaben von Parametern abhängig von der jeweiligen Preform- und/oder Behältersorte. Beim Kalibrieren kann auch der Anschlag 7 benutzt werden.

Die Energieversorgung des Reckstangen-Antriebssystems A zum elektrischen Recken wird beispielsweise über eine Schleifringanordnung der Drehdurchführung 6 in Fig. 1 vorgenommen, wobei (Fig. 5) zumindest dem Servomotor 16 der Blasstation 4 ein Frequenzumrichter 43, vom Servomotor 16 mit einem Abstand separiert oder sogar in einer zentralen Installationsstelle im Blasrad 2 installiert, zugeordnet ist, von dem der Servomotor 16 über Anschlüsse 44 mit Versorgungsspannung beaufschlagt wird, die in einem Zwischenkreis 45 des Frequenzumrichters 43 generiert und gehalten wird, und zwar unabhängig von der über Anschlüsse 44 zugeführten Nennspannung oder Netzspannung. Im Zwischenkreis 45 ist ein geregeltes Hochstell-Schaltnetzteil 46 vorgesehen, das unabhängig von der Nennspannung die Zwischenkreisspannung auf etwa 600 Volt bis 900 Volt hochstellt und hält. Ein besonders zweckmäßiger Hochstellbereich liegt zwischen etwa 750 Volt und 800 Volt zur Versorgung des Servomotors 16 und zu dessen Geschwindigkeitssteuerung. Die Zwischenkreisspannung kann mittels des geregelten Hochstell-Schaltnetzteils 46 unabhängig von der Nennspannung gehalten werden, so dass ein an diese höhere Zwischenkreisspannung angepasster Servomotor 16 eingesetzt werden kann, unabhängig von eventuell länderspezifisch variierenden Netzspannungen. Die hochgestellte Zwischenkreisspannung resultiert in niedrigeren Verlustleistungen und kleineren Kabelquerschnitten. Ferner lassen sich solche Servomotoren 16 als Linearmotor L mit höheren Geschwindigkeiten betreiben, ohne dass die Kraft einbricht. Zweckmäßig sind die Frequenzumrichter 43 über Kopplungen 48 im drehenden Teil 1a elektrisch verbunden, so dass alle Servomotoren 16 dieselbe hochgestellte Zwischenkreisspannung nutzen. Ferner ist in Fig. 5 schematisch mit 50 ein Energiespeicher im drehenden Teil 1a angeordnet, beispielsweise eine Schwungscheibe, eine Kondensatorbank, eine Batterie, oder dgl. Der Energiespeicher 50 dient dazu, bei einem Netzausfall eine korrekte Rückstellung aller beweglichen Komponenten der Blasstationen vorzunehmen, um Schäden beim Neustart abzuwenden.

Ferner ist in Fig. 5 angedeutet, dass die Frequenzumrichter 43 im drehenden Teil 1a über die Drehdurchführung 49 bzw. die Schleifringanordnung 6 über elektrische Kopplungen 48 mit Frequenzumrichtern 43' für andere Servomotoren im stehenden Teil 1b elektrisch gekoppelt sind, wobei im stehenden Teil ein Energiespeicher 50 (anstelle des im drehenden Teil gezeigten Energiespeichers 50) vorgesehen ist, um bei Netzausfall auch die Servomotoren 16 im drehenden Teil 1a" kontrolliert herunterfahren zu können, z.B. auf Drehzahl Null, und um Ausgangspositionen einstellen zu können. Es sind auf diese Weise beispielsweise elektrische Antriebsachsen im drehenden Teil mit elektrischen Antriebsachsen im stehenden Teil gekoppelt.

## Patentansprüche

1. Streckblasmaschine (1) mit mindestens einer Blasstation (4), in der mindestens eine geteilte Blasform (26), eine verstellbare Blasdüse (8) mit einer taktabhängig gesteuerten Ventilsektion (12), eine verstellbare Reckstange (15) mit einem von mehreren verschiedenen, taktabhängig gesteuerten Reckstangen-Antriebssystem (A) und eine elektronische Steuereinheit (20) zumindest zum Steuern des Reckstangen-Antriebssystems (A) vorgesehen sind, wobei das Reckstangen-Antriebssystem (A) zumindest eine Kombination aus einem elektrischen Servoantrieb und einem Pneumatikantrieb oder nur einen elektrischen Servoantrieb umfasst, **dadurch gekennzeichnet, dass** die in der Blasstation (4) angeordnete elektronische Steuereinheit (20) mit Hard- und Software-Technik zum wahlweisen Betreiben der Blasstation (4) mit dem jeweiligen Reckstangen-Antriebssystem (A) ausgestattet ist, und dass ein als Linearmotor (L) mit einem Läufer (34) ausgebildeter Servomotor (16) des Reckstangenantriebssystems (A) bezüglich seines Läufers (34) tubular ausgebildet ist und mit dem Läufer (34) einen koaxialen oder im Wesentlichen koaxialen Direktantrieb der Reckstange (15) bildet.

2. Streckblasmaschine nach Anspruch 1, **dadurch gekennzeichnet, dass** der Läufer (34) gegenüber der Reckstange (15) zur Seite versetzt angeordnet ist, vorzugsweise um maximal etwa 100 mm.

3. Streckblasmaschine nach Anspruch 1, **dadurch gekennzeichnet, dass** die Steuereinheit (20) in der Blasstation (4) vom elektrischen Servoantrieb separiert installiert ist.

4. Streckblasmaschine nach Anspruch 3, **dadurch gekennzeichnet, dass** ein Frequenzumrichter (43) des elektrischen und einen Servomotor (16) in Form des Linearmotors (L) aufweisenden Servoantriebs vom Servomotor (16) separiert ist, vorzugsweise mit einem eine Wärmeeinkopplung vom Servomotor zum Frequenzumrichter (43) ausschließenden Abstand oder an einer mehrere bis alle Frequenzumrichter (43) für mehrere Blasstationen (4) der Streckblasmaschine (1) enthaltenden Zentral-Installationsstelle, z.B. einem, vorzugsweise gekühlten, Schaltschrank, installiert ist.

5. Streckblasmaschine nach Anspruch 1, **dadurch gekennzeichnet, dass** ein Frequenzumrichter (43) eines den Linearmotor (L) aufweisenden elektrischen Servoantriebs, vorzugsweise in einem Zwischenkreis (45), wenigstens einen geregelten Hochstell-Schaltnetzteil (46) aufweist, mit dem eine auf zwischen etwa 600 bis 900 Volt, vorzugsweise zwischen etwa 750 bis 800 Volt, angehobene Zwischenkreisspannung zur Versorgung des an die angehobene Zwischenkreisspannung angepassten Linearmotors (L) unabhängig von der auf den Frequenzumrichter aufgebrachten Netzspannung erzeugbar und haltbar ist.

6. Streckblasmaschine nach Anspruch 1, **dadurch gekennzeichnet, dass** Zwischenkreise (45) von Frequenzumrichtern (43) in einem drehenden Teil (1a) mit Zwischenkreisen (45') von Frequenzumrichtern (43') in einem stehenden Teil (1b) elektrisch gekoppelt sind, und dass im stehenden Teil (1b) wenigstens ein Energiespeicher (50) zum Versorgen zumindest elektrischer Servomotoren (16) im drehenden Teil (1a), vorzugsweise bei Netzausfall, vorgesehen ist.

7. Streckblasmaschine nach Anspruch 6, **dadurch gekennzeichnet, dass** im drehenden Teil (1a) wenigstens ein Energiespeicher (50) vorgesehen ist, vorzugsweise eine Schwungscheibe, eine Kondensatorbank, eine Batterie, oder dgl..

8. Streckblasmaschine nach Anspruch 1, **dadurch gekennzeichnet, dass** Antriebsachsen eines stehenden Teils (1b) mit Antriebsachsen elektrischer Antriebssysteme eines drehenden Teils (1a) elektrisch gekoppelt sind.

9. Streckblasmaschine nach Anspruch 1, **dadurch gekennzeichnet, dass** der Läufer (34) gegenüber einem Stator (38) des Linearmotors (L) durch Führungsringe (33) im Stator (38) bzw. an beiden Enden des Stators (38) oder wenigstens eine in den Stator (38) durchgehend oder partiell durchgehend integrierte Führungshülse (33') oder wenigstens eine außerhalb des Stators (38) angeordnete Führung (33"), vorzugsweise über zwei beabstandete Führungsglieder (41) und eine Linearführung (42), geführt ist.

10. Streckblasmaschine nach Anspruch 1, **dadurch gekennzeichnet, dass** mit einem als Linearmotor (L) ausgebildeten elektrischen Servomotor (16) die Reckstange (15) über die Steuereinheit (20) bei ein und demselben Arbeitstakt im Produktionsablauf wahlweise kraftsteuerbar oder wegsteuerbar ist.

11. Streckblasmaschine nach Anspruch 1, **dadurch gekennzeichnet, dass** der Läufer (34) zumindest zum teilweisen Kompensieren aus dem Blasdruck in der Blasform (26) auf die Reckstange (15) wirkender Kräfte mit einem Kraftspeicher (35), wie einer Feder oder einem Pneumatikzylinder, gekoppelt ist.

12. Streckblasmaschine nach Anspruch 1, **dadurch gekennzeichnet, dass** der Linearmotor (L) und die Steuereinheit (20) auf einem, vorzugsweise auch die Ventilsektion (12) tragenden, Lagerbock (3), vorzugsweise über einen Kühlkörper (5), montiert sind, und dass der Lagerbock (3) eine Linearführung (28) für einen Reckschlitten (14) aufweist, an welchem die einen relativ zur Reckstange (15) linear verstellbaren Blasschlitten (9) durchsetzende Reckstange (15) mit dem Läufer (34), vorzugsweise trennbar, gekuppelt ist.

## Claims

1. Stretch-blow molding machine (1) with at least one blow molding station (4) in which at least one split blow mold (26), an adjustable blow nozzle (8) with a clock-controlled valve section (12), an adjustable stretching rod (15) with one of several different clock-controlled stretching rod drive systems (A), and with an electronic control unit (20) at least for controlling the stretching rod drive system (A) are provided, wherein the stretching rod drive system (A) comprises at least one combination of an electric servo drive and a pneumatic drive, or only an electric servo drive, **characterized in that** the electronic control unit (20) arranged in the blow molding station (4) is equipped with hardware and software technology for selectively operating the blow molding station (4) with the respective stretching rod drive system, and that a servomotor (16) of the stretching rod drive system designed as linear motor (L) with a runner (34) has a tubular design with respect to its runner (34) and forms with the runner (34) a coaxial or essentially coaxial direct drive of the stretching rod (15).

2. Stretch-blow molding machine according to claim 1, **characterized in that** the runner (34) of the linear motor (L) is arranged with respect to the stretching rod (15) laterally offset, preferably by maximally about 100 mm.

3. Stretch-blow molding machine according to claim 1, **characterized in that** the electronic control unit (20) is installed in the blow molding station (4) separately from the electric servo drive.

4. Stretch-blow molding machine according to claim 3, **characterized in that** a frequency converter (43) of the electric servo drive comprising the linear motor (L) is separated from the servomotor (16), preferably by a distance excluding heat coupling from the servomotor to the frequency converter (43), or is installed at a central installation point containing several to all frequency converters (43) for several blow molding stations (4) of the stretch-blow molding machine (1), e.g. in a, preferably cooled, switch cabinet.

5. Stretch-blow molding machine according to claim 1, **characterized in that** a frequency converter (43) of an electric servo drive comprising the linear motor (L), comprises ,preferably in an intermediate circuit (45), at least one controlled set-up switched-mode power supply (46) by means of which an intermediate circuit voltage set up to between about 600 to 900 Volt, preferably to between about 750 to 800 Volt, for supplying the electric servomotor (16) adapted to the set-up intermediate circuit voltage can be generated and maintained independent of the mains voltage applied to the frequency converter.

6. Stretch-blow molding machine according to claim 1, **characterized in that** intermediate circuits (45) of frequency converters (43) for electric servomotors (16) in the rotating part (1a) are electrically coupled with intermediate circuits (45') of frequency converters (43') for electric servomotors in the stationary part (1b), and that at least one energy storage (50) for supplying at least the electric servomotors (16) in the rotating part (1a) in case of a power outage is provided in the stationary part (1b).

7. Stretch-blow molding machine according to claim 6, **characterized in that** at least one energy storage (50) is provided in the rotating part (1a), preferably a flywheel, a capacitor bank, a battery, or the like.

8. Stretch-blow molding machine according to claim 1, **characterized in that** drive axes of the stationary part (1b) are electrically coupled with drive axes of electric drive systems in the rotating part (1a).

9. Stretch-blow molding machine according to claim 1, **characterized in that** the runner (34) is guided with respect to a stator (38) of the linear motor (L) by guide rings (33) in the stator (38) at both ends of the stator (38), or by at least one guide sleeve (33') continuously or partially continuously penetrating the stator (38), or by at least one guidance (33") arranged outside the stator (38), preferably by two spaced guide members (41) and a linear guide (42).

10. Stretch-blow molding machine according to claim 1, **characterized in that** with the electric servomotor (16) constituted by a linear motor (L) the stretching rod (15) can be selectively force-controlled or path-controlled by the control unit (20) in one and the same cycle of a production process.

11. Stretch-blow molding machine according to claim 1, **characterized in that** the runner (34) is coupled with an energy storage mechanism (35), such as a spring or a pneumatic cylinder, at least for partially compensating forces acting from the blow pressure in the blow mold (26) on the stretching rod (15).

12. Stretch-blow molding machine according to claim 1, **characterized in that** the linear motor (L) and the control unit (20) are mounted, preferably via a heat sink (5), on a bearing support (3) optionally also supporting the valve section (12), and that the bearing support (3) comprises a linear guide (28) for a stretching slide (14) penetrated by the stretching rod (15), the stretching slide (9) being coupled with the runner (34), preferably in a releasable manner, and being lineally adjustable relative to the stretching rod (15).

## Revendications

1. Machine de soufflage-étirage (1) comprenant au moins une station de soufflage (4), dans laquelle sont prévus au moins un moule de soufflage (26) divisé, une buse de soufflage (8) réglable avec une section de soupape (12) commandée en fonction de la cadence, une tige d'étirage (15) réglable avec un système d'entraînement (A) de multiples tiges d'étirage différentes commandées en fonction de la cadence, et une unité de commande électronique (20) au moins pour commander le système d'entraînement de tiges d'étirage (A), dans laquelle le système d'entraînement de tiges d'étirage (A) comprend au moins une combinaison d'une servocommande électrique et d'un entraînement pneumatique ou seulement une servocommande électrique, **caractérisée en ce que** l'unité de commande électronique (20) agencée dans la station de soufflage (4) est équipée d'une technique matérielle et logicielle pour faire fonctionner au choix la station de soufflage (4) avec le système d'entraînement de tiges d'étirage (A) respectif, et **en ce qu'**un servomoteur (16) du système d'entraînement de tiges d'étirage (A), qui est conçu sous la forme d'un moteur linéaire (L) avec un rotor (34), est conçu tubulaire par rapport à son rotor (34) et forme un entraînement direct coaxial ou sensiblement coaxial de la tige d'étirage (15) avec le rotor (34).

2. Machine de soufflage-étirage selon la revendication 1, **caractérisée en ce que** le rotor (34) est agencé décalé latéralement par rapport à la tige d'étirage (15), de préférence d'environ 100 mm au maximum.

3. Machine de soufflage-étirage selon la revendication 1, **caractérisée en ce que** l'unité de commande (20) est installée dans la station de soufflage (4) séparément de la servocommande électrique.

4. Machine de soufflage-étirage selon la revendication 3, **caractérisée en ce qu'**un convertisseur de fréquence (43) de la servocommande électrique présentant un servomoteur (16) sous la forme d'un moteur linéaire (L) est séparé du servomoteur (16), de préférence avec une distance excluant un couplage thermique du servomoteur au convertisseur de fréquence (43), ou est installé à un poste d'installation central contenant plusieurs à tous les convertisseurs de fréquence (43) pour plusieurs stations de soufflage (4) de la machine de soufflage-étirage (1), par exemple une armoire électrique, de préférence refroidie.

5. Machine de soufflage-étirage selon la revendication 1, **caractérisée en ce qu'**un convertisseur de fréquence (43) d'une servocommande électrique présentant le moteur linéaire (L), de préférence dans un circuit intermédiaire (45), présente au moins une alimentation à découpage à position haute régulée (46) avec laquelle une tension de circuit intermédiaire élevée entre environ 600 et 900 volts, de préférence d'environ 750 à 800 volts, peut être produite et maintenue pour alimenter le moteur linéaire (L) adapté à la tension de circuit intermédiaire élevée indépendamment de la tension de réseau appliquée au convertisseur de fréquence.

6. Machine de soufflage-étirage selon la revendication 1, **caractérisée en ce que** des circuits intermédiaires (45) de convertisseurs de fréquence (43) sont couplés électriquement dans une partie rotative (1a) à des circuits intermédiaires (45') de convertisseurs de fréquence (43') dans une partie fixe (1b), et **en ce qu'**au moins un accumulateur d'énergie (50) est prévu dans la partie fixe (1b) pour alimenter au moins des servomoteurs électriques (16) dans la partie rotative (1a), de préférence en cas de panne de courant.

7. Machine de soufflage-étirage selon la revendication 6, **caractérisée en ce qu'**au moins un accumulateur d'énergie (50) est prévu dans la partie rotative (1a), de préférence un volant d'inertie, un banc de condensateurs, une batterie ou similaire.

8. Machine de soufflage-étirage selon la revendication 1, **caractérisée en ce que** les axes d'entraînement d'une partie fixe (1b) sont couplés électriquement à des axes d'entraînement de systèmes d'entraînement électriques d'une partie rotative (1a).

9. Machine de soufflage-étirage selon la revendication 1, **caractérisée en ce que** le rotor (34) est guidé par rapport à un stator (38) du moteur linéaire (L) par l'intermédiaire de bagues de guidage (33) dans le stator (38) ou aux deux extrémités du stator (38) ou d'au moins une douille de guidage (33') intégrée de manière continue ou partielle dans le stator (38) ou d'au moins un guide (33") agencé à l'extérieur du stator (38), de préférence par l'intermédiaire de deux éléments de guidage (41) espacés et d'un guide linéaire (42).

10. Machine de soufflage-étirage selon la revendication 1, **caractérisée en ce que**, avec un servomoteur électrique (16) réalisé sous la forme d'un moteur linéaire (L), la tige d'étirage (15) peut être commandée au choix par la force ou à distance par l'intermédiaire de l'unité de commande (20) pour une même cadence de travail dans le déroulement de la production.

11. Machine de soufflage-étirage selon la revendication 1, **caractérisée en ce que** le rotor (34) est couplé à un accumulateur de force (35), tel qu'un ressort ou un vérin pneumatique, au moins pour compenser partiellement les forces agissant sur la tige d'étirage (15) provenant de la pression de soufflage dans le moule de soufflage (26).

12. Machine de soufflage-étirage selon la revendication 1, **caractérisée en ce que** le moteur linéaire (L) et l'unité de commande (20) sont montés sur un support de palier (3), supportant de préférence aussi la section de soupape (12), de préférence par l'intermédiaire d'un corps de refroidissement (5), et **en ce que** le support de palier (3) présente un guide linéaire (28) pour un chariot d'étirage (14), au niveau duquel la tige d'étirage (15) passant à travers un chariot de soufflage (9) réglable linéairement par rapport à la tige d'étirage (15) est couplée au rotor (34), de préférence de manière séparable.
